# EUROPEAN PATENT SPECIFICATION

(11) **EP 1 348 599 B1**
(45) Date of publication and mention of the grant of the patent: **11.08.2010**
(21) Application number: 03006396.0
(22) Date of filing: 20.03.2003
(51) Int. Cl.: B60R 21/16, B60R 21/20, B60R 13/02

(54) **Occupant protective apparatus for vehicle**
Kraftfahrzeuginsassensicherheitseinrichtung
Appareil de protection d'un occupant de véhicule

(30) Priority: 28.03.2002 JP 2002092014
(43) Date of publication of application: 01.10.2003
(60) Divisional application: 08009846.0
(73) Proprietor: Mitsubishi Jidosha Kogyo Kabushiki Kaisha, Tokyo 108-8410 (JP)
(72) Inventor: Yamamura, Daisuke, Mitsubishi Jidosha Kogyo K. K., Tokyo (JP); Nagayama, Noritaka, Mitsubishi Jidosha Kogyo K. K., Tokyo (JP)
(74) Representative: Grünberg, Thomas

(56) References cited:
- US-A- 6 155 594
- US-A1- 2001 000 290
- US-A1- 2001 022 441
- PATENT ABSTRACTS OF JAPAN vol. 2000, no. 09, 13 October 2000 (2000-10-13) & JP 2000 168482 A (TOYOTA MOTOR CORP), 20 June 2000 (2000-06-20)
- PATENT ABSTRACTS OF JAPAN vol. 2000, no. 05, 14 September 2000 (2000-09-14) & JP 2000 033845 A (TOYOTA MOTOR CORP; TOYODA GOSEI CO LTD), 2 February 2000 (2000-02-02)

## Description

### BACKGROUND OF THE INVENTION

### (1) Field of the Invention

The present invention relates to an occupant protective apparatus for a vehicle.

### (2) Description of the Related Art

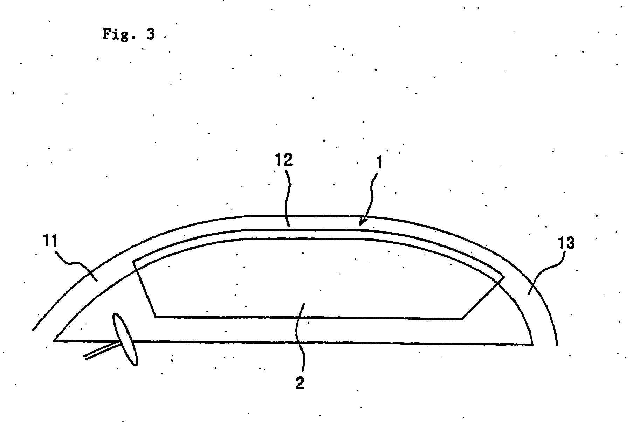

Driver/passenger-side airbags have been in widespread use as protective equipment for automobiles. In addition to such front seat airbags, an airbag adapted to be inflated on the side of a vehicle compartment has also been coming into widespread use. As examples of such an airbag provided on the side of a vehicle compartment, a so-called curtain adapted to be inflated in such a manner as to extend between a front pillar 11 and a rear pillar 13 as shown in FIG. 3 as well as a so-called side airbag provided on the side of a vehicle compartment have been developed and put into practical use.

Such a curtain airbag (hereinafter simply referred to as "airbag") 1 is comprised of an airbag main body 2 that is stored in the vicinity of a side roof rail (or a side roof panel) 12 and in the longitudinal direction of the vehicle. When a high impact is applied to a side of the vehicle in the event of collision or the like, the airbag main body 2 is inflated to cover the overall side surface of a vehicle compartment to alleviate the impact on an occupant (more particularly, the impact on the head of an occupant).

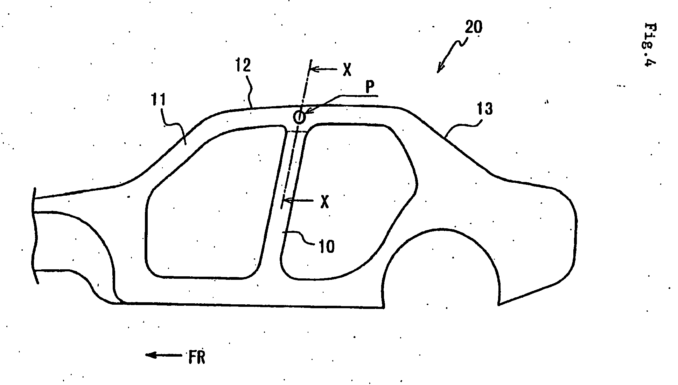

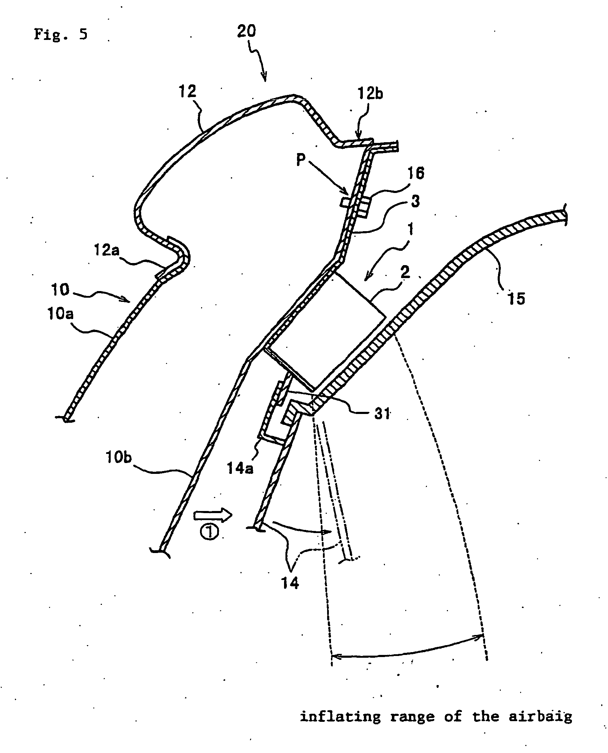

A brief description will now be given of the mounting structure of the conventional airbag 1 with reference to FIGS. 4 and 5. FIG. 4 is a schematic side view showing a vehicle body 20 of an automobile, and FIG. 5 is a sectional view taken along line X-X of FIG. 4. As shown in FIG. 5, a center pillar 10 is comprised of an outer panel 10a disposed on the outer side of the vehicle and an inner panel 10b disposed on the inner side of the vehicle, and the edges, not shown, of the panels 10a and 10b in the longitudinal direction of the vehicle are welded to each other.

In the upper part of the center pillar 10, the upper end of the outer panel 10a and a vehicle outer-side edge portion 12a of the side roof rail 12 are lapped one over the other to be joined together, and the upper end of the inner panel 10b and a vehicle inner-side edge portion 12b of the side roof rail 12 are lapped one over the other to be joined together.

Further, a pillar trim 14 is disposed on the vehicle compartment inner side of the inner panel 10b in such a manner as to cover a vehicle compartment inner-side surface of the inner panel 10b. Further, the upper end of the pillar trim 14 is connected to a head lining 15.

The airbag main body 2 is disposed in a space between the pillar trim 14 and the inner panel 10b. As shown in FIG. 5, the airbag main body 2 is fastened on the inner panel 10b via a bracket 3 with a bolt 16 or the like. The bracket 3 is formed with a protrusion 31 extending downward, and an engagement portion 14a integrated with the pillar trim 14 is abutted against the protrusion 31. The airbag main body 2 is usually folded up into a fan or accordion shape, or wound up into a cylindrical shape.

A brief description will now be given of the operation of the curtain airbag 1 mounted as described above. First, in response to a side collision, the airbag main body 2 starts inflating to spread into the vehicle compartment from the space between the center pillar 10 and the pillar trim 14. On the other hand, due to impact of the side collision, the inner panel 10b of the center pillar 10 moves inward in the vehicle compartment as indicated by the arrow ① in FIG. 5. Since the center trim 14 is fixed to the inner panel 10b, the pillar trim 14 moves inward in the vehicle compartment with the movement of the inner panel 10b (as indicated by two-dot dash lines in FIG. 5).

As shown in FIG. 5, the airbag main body 2 is fastened on a point P in the upper part of the inner panel 10b and in the vicinity to the joint of the inner panel 10b and the side roof rail 12, and the point P has a relatively high stiffness and is deformed to a relatively small degree even in the event of a side collision. Thus, the airbag main body 2 moves to a smaller degree as compared with the inner pillar 10b and the pillar trim 14.

Therefore, the pillar trim 14 is likely to enter the inflating range of the airbag 1 in the event of a side collision, and the spreading airbag 1 may interfere with the pillar trim 14 to inhibit the airbag 1 from inflating in an ideal manner.

The above-mentioned engagement part 14a is intended to prevent the pillar trim 14 from entering the inflating range of the airbag 1. In the event of a side collision, the engagement part 14b is engaged with the protrusion 31 of the bracket 3 to suppress the relative displacement of the airbag main body 2 and the pillar trim 14, thus preventing the pillar trim 14 from entering the inflating range of the airbag 1.

According to the above described prior art, the engagement part 14a is required to have a high stiffness so as to inhibit the pillar trim 14 from entering the inflating range of the airbag 1. Since the pillar trim 14 is ordinarily made of resin, however, it is difficult to provide the engagement part 14a with a high stiffness.

Therefore, the prior art requires adding an L-shaped plate part to the engagement part 14a, and thus has the problem of increasing the number of parts and the weight.

Incidentally, the related arts are also disclosed in Japanese Laid-Open Patent Publication (Kokai) No. 2000-168482 and Japanese Laid-Open Patent Publication (Kokai) No. 2000-33845. According to the related arts disclosed in these publications, as is the case with the above described prior art, a bracket for holding an airbag is fixed to a part in the upper part of a center pillar and in the vicinity of a side roof rail, and thus, it is impossible to solve the above-mentioned problem.

It is therefore an object of the present invention to provide an occupant protective apparatus that is capable of preventing an airbag and a pillar trim from interfering with each other with simple arrangement, thus enabling the airbag to inflate in a reliable manner.

### SUMMARY OF THE INVENTION

To attain the above object, the present invention provides an occupant protective apparatus for a vehicle, comprising: a side roof panel constituting an upper part of a side of a vehicle body; a pillar panel with one end thereof connected to the side roof panel; a pillar trim attached to the pillar panel to cover a vehicle compartment inner-side surface of the pillar panel; and an airbag fixed to the pillar panel via a bracket and disposed above the pillar trim, for inflating and spreading into the vehicle compartment; wherein the bracket comprises a holding part that holds the airbag and a mounting part that is provided below a lower end of the side roof panel and mounted on the pillar panel, and the mounting part is located below the lower end of the side roof panel.

With the above arrangement, even if the pillar panel moves inward in the vehicle compartment in the event of a side collision, the airbag mounted on the pillar panel also moves inward in the vehicle compartment to suppress the relative displacement of the airbag and the pillar panel.

As a result, it is possible to prevent the pillar trim and the airbag from interfering with each other when the airbag is inflating, and hence enable the airbag to inflate in a reliable manner.

### BRIEF DESCRIPTION OF THE DRAWINGS

The nature of this invention, as well as other objects and advantages thereof, will be explained in the following with reference to the accompanying drawings, in which like reference characters designate the same or similar parts throughout the figures and wherein:

FIG. 1 is a schematic sectional view showing the construction of the essential parts of an occupant protective apparatus for a vehicle according to an embodiment of the present invention;

FIG. 2 is a schematic side view showing a vehicle body to which is applied the occupant protective apparatus for the vehicle according to the embodiment;

FIG. 3 is a view useful in explaining a conventional curtain airbag;

FIG. 4 is a schematic side view showing a vehicle provided with the conventional curtain airbag; and

FIG. 5 is a schematic sectional view taken along line X-X of FIG. 4 and useful in explaining the prior art.

### DESCRIPTION OF THE PREFFERED EMBODIMENT

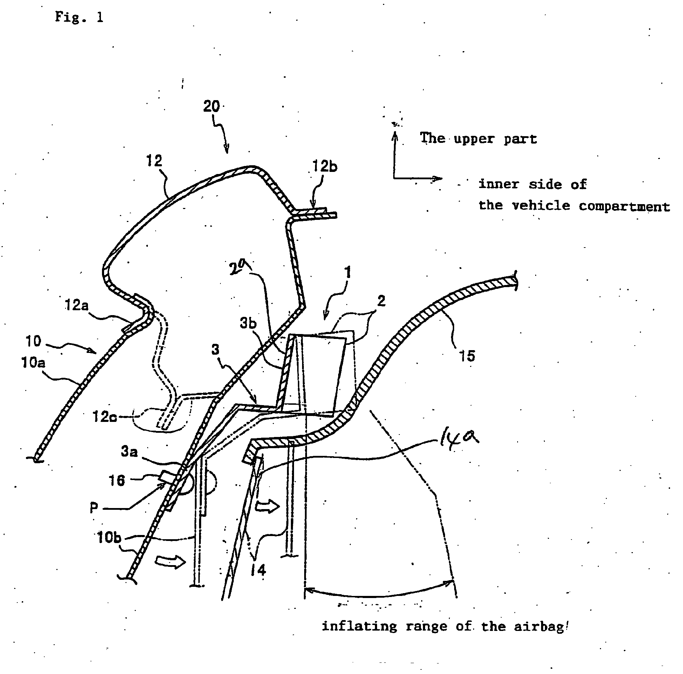

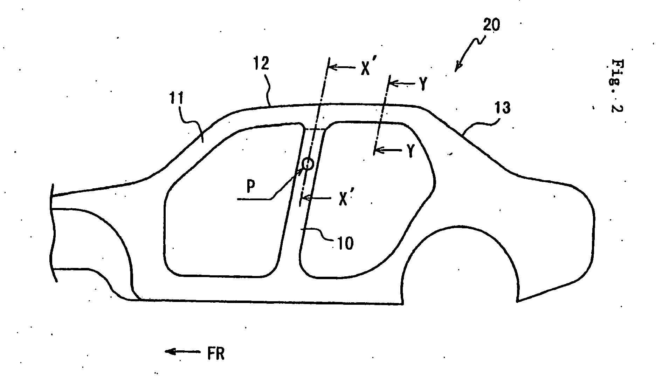

A detailed description will now be given of an occupant protective apparatus for a vehicle according to an embodiment of the present invention with reference to the accompanying drawings. FIG. 1 is a schematic sectional view showing the essential parts of the occupant protective apparatus according to the embodiment of the present invention, and FIG. 2 is a side view showing a vehicle body to which is applied the occupant protective apparatus shown in FIG. 1. Note that FIG. 1 mainly illustrates an X'-X' section of FIG. 2, but also partially illustrates a Y-Y section of FIG. 2 by broken lines.

As shown in FIG. 1, a center pillar 10 is comprised of an outer panel (outer pillar panel) 10a disposed on the outer side of a vehicle and an inner panel (inner pillar panel) 10b disposed on the inner side of the vehicle. The edges, not shown, of the panels 10a and 10b in the longitudinal direction of the vehicle are welded to each other.

In the upper part of the center pillar 10, the upper end of the outer panel 10a and a vehicle outer-side edge portion 12a of a side roof rail (side roof panel) 12 are lapped one over the other to be joined together, and the upper end of the inner panel (pillar panel) 10b and a vehicle inner-side edge portion 12b of the side roof rail 12 are lapped one over the other to be joined together.

A pillar trim 14 is fixed to the vehicle compartment inner side of the inner panel 10b by means of a clip, not shown, in such a manner as to cover the inner panel 10b. Further, the upper end of the pillar trim 14 is connected to a head lining 15.

An airbag 1 is disposed in a space between the head lining 15 and the inner panel 10b. The airbag 1 is a so-called curtain airbag, and is adapted to extend between the front pillar 11 and the rear pillar 13. When a high impact is applied to a side of the vehicle due to a collision or the like, the airbag 1 is inflated to spread out from the upper part of the side of the vehicle in such a manner as to cover the overall inner side face of a vehicle compartment (refer to FIG. 3). It should be noted that the side roof rail 12 and the upper part of the inner panel 10b constitute a first side member, the outer panel 10a and a part of the inner panel 10b continued downward from the first side member constitute a second side member with a lower stiffness than the first side member, and the pillar trim 14 fixed to the vehicle compartment inner side of the inner panel 10b constitutes a third side member.

Incidentally, as shown in FIG. 1, an airbag main body 2 is fastened on the inner panel 10b via a bracket 3 by means of a bolt 16 or the like. The occupant protective apparatus for the vehicle according to the present invention greatly differs from the prior art in that a point P where the bracket 3 holding the airbag main body 2 is mounted on the inner panel 10b is lower than that of the prior art, and that the airbag main body 2 is disposed farther inward in the vehicle compartment than the upper end of the pillar trim 14 as shown in FIGS. 1 and 2.

Specifically, the bracket 3 is comprised of a mounting part 3a that is fixed to a vehicle body 20, and a holding part 3b that holds the airbag main body 2. The mounting part 3a extends downward to be mounted on the inner panel 10b as shown in FIG. 1.

A point P where the mounting part 3a is mounted on the inner panel 10b is not set in the vicinity of the side roof rail 12, but is set on the center pillar 10 constituting the second side member below the side roof rail 12 as shown in FIGS. 1 and 2. This is because the pillar trim 14 moves together with the center pillar 10 in the event of a side collision. By fastening the bracket 3 at a location below the side roof rail 12 as mentioned above, it is possible to suppress the relative displacement of the airbag main body 2 and the pillar trim 14 in the event of a side collision.

More particularly, in the present embodiment, the mounting point P is set at a location below a flange portion (lower end portion) 12c (indicated by a broken line in FIG. 1) of the side roof rail 12. This is because above the flange portion 12c, the inner panel 10b of the center pillar 10 is overlapped and integrated with the side roof rail 12 to constitute the first side member with a high stiffness, but below the flange portion 12c, the inner panel 10b of the center pillar 10 is not overlapped with the side roof rail 12 to constitute the second side member with a relatively low stiffness such that the center pillar 10 moves together with the pillar trim 14 as the third side member in the event of a side collision.

Therefore, by fastening the bracket 3 on the inner panel 10b at a location below the flange portion 12c, it is possible to further suppress the relative displacement of the airbag main body 2 and the pillar trim 14 and hence prevent the inflation of the airbag 1 from being obstructed.

Further, in the direction of the width of the vehicle (the horizontal direction in FIG. 1), the airbag main body 2 is disposed farther inward in the vehicle compartment than the upper end of the pillar trim 14, and it is therefore possible to surely prevent the pillar trim 14 and the airbag main body 2 from interfering with each other when the airbag 1 is inflating. Specifically, a vehicle compartment outer-side surface 2a of the airbag main body 2 is disposed farther inward in the vehicle compartment than a vehicle compartment inner-side surface 14a of the upper end of the pillar trim 14.

With the above described arrangement of the occupant protective apparatus according to the embodiment of the present invention, in the event of a side collision, both the center pillar 10 and the trim panel 14 move inward in the vehicle compartment in response to an impact of the collision, (refer to two-dot dash lines in FIG. 1). Further, the airbag main body 2 is rapidly inflated to spread out from the space between the pillar trim 14 and the head lining 15.

Since the mounting point P of bracket 3 that fastens the airbag main body 2 on the vehicle body 20 is set at a location with a relatively low stiffness in the inner panel 10b of the center pillar 10 (the second side member), and more specifically, the mounting point P is set at a location lower than the lower-end flange portion 12c of the side roof rail 12, the bracket 3 moves while maintaining the relative positional relation with the pillar trim 14, thus suppressing the relative displacement of the airbag main body 2 and the pillar trim 14.

As a result, it is possible to prevent the pillar trim 14 from entering the inflating range of the airbag 1, and hence reliably prevent the airbag and the pillar trim from interfering with each other.

Further, with the arrangement in which the airbag main body 2 is disposed farther inward in the vehicle compartment than the upper end of the pillar trim 14, even if the pillar trim 14 moves inward in the vehicle compartment to a greater extent than the inner pillar 10b, it is possible to reliably prevent the airbag 1 and the pillar trim 14 from interfering with each other.

Further, according to the present invention, it is possible to eliminate the necessity of adding new parts and the like, and to avoid an increase in cost and man-hour required for assembly.

Although the present invention has been described in some detail by way of illustration for purposes of clarity of understanding, it will be apparent that certain changes and modifications may be practiced within the scope of the claims. Such modifications and variations which may be apparent to a person skilled in the art are intended to be within the scope of this invention. For example, although in the above described embodiment, the inner panel 10b of the center pillar 10 is applied as the pillar panel, the present invention is not limited to this, but either a front pillar or a rear pillar may be applied as the pillar panel.

## Claims

1. An occupant protective apparatus for a vehicle, comprising:
a side roof panel (12) constituting an upper part of a side of a vehicle body;
a pillar panel (10) with one end thereof connected to said side roof panel (12);
a pillar trim (14) attached to said pillar panel (10) to cover a vehicle compartment inner-side surface of said pillar panel (10);
an airbag (1) fixed to said pillar panel (10) and disposed above said pillar trim (14), for inflating and spreading into the vehicle compartment;
a bracket (3) comprising a holding part (3b) that holds said airbag (1) and a mounting part (3a) that is mounted on said pillar panel (10) **characterized in that** said mounting part (3a) of said bracket (3) is provided below a lower end of said side roof panel (12).

2. An occupant protective apparatus for a vehicle according to claim 1, wherein said airbag (1) is disposed farther inward in the vehicle compartment than an upper end of said pillar trim (14).

3. An occupant protective apparatus for a vehicle according to claim 2, wherein a vehicle compartment outer- side surface of said airbag (1) is disposed farther inward in the vehicle compartment than a vehicle compartment inner-side surface of the upper end of said pillar trim (14).

4. An occupant protective apparatus for a vehicle according to claim 1, wherein one end of said pillar panel (10) comprises an overlapping part that overlaps said side roof panel (12), and a lower end edge of said side roof panel (12) is located below the overlapping part.

5. An occupant protective apparatus for a vehicle according to claim 1, wherein said pillar panel (10) comprises an outer pillar panel (10a) disposed on an outer side of the vehicle compartment and an inner pillar panel disposed on an inner side of the vehicle compartment, and said bracket (3) is mounted on said inner pillar panel (10b).

## Patentansprüche

1. Insassensicherheitsvorrichtung für ein Kraftfahrzeug, umfassend:
ein seitliches Dachelement (12), das einen oberen Teil einer Seite eines Fahrzeugaufbaus bildet;
ein Säulenelement (10), von dem ein Ende mit dem seitlichen Dachelement (12) verbunden ist;
eine Säulenverkleidung (14), die an dem Säulenelement (10) angebracht ist, um eine Fahrzeuginnenrauminnenseitenfläche des Säulenelements (10) zu überdecken;
einen Airbag (1), der an dem Säulenelement (10) befestigt ist und oberhalb der Säulenverkleidung (14) angeordnet ist, um sich aufzublasen und in den Fahrzeuginnenraum auszudehnen;
einen Bügel (3), der einen Halteteil (3b), der den Airbag (1) hält, und einen Befestigungsteil (3a) umfasst, der an dem Säulenelement (10) befestigt ist, **dadurch gekennzeichnet, dass** das Befestigungsteil (3a) des Bügels (3) unterhalb eines unteren Endes des seitlichen Dachelements (12) angeordnet ist.

2. Insassensicherheitsvorrichtung für ein Fahrzeug nach Anspruch 1, wobei der Airbag (1) weiter innerhalb des Fahrzeuginnenraums angeordnet ist als ein oberes Ende der Säulenverkleidung (14).

3. Insassensicherheitsvorrichtung für ein Fahrzeug nach Anspruch 2, wobei eine Fahrzeuginnenraumaußenseitenfläche des Airbags (1) weiter innerhalb des Fahrzeuginnenraums angeordnet ist als eine Fahrzeuginnenrauminnenseitenfläche des oberen Endes der Säulenverkleidung (14).

4. Insassensicherheitsvorrichtung für ein Fahrzeug nach Anspruch 1, wobei ein Ende des Säulenelements (10) ein überlappendes Teil umfasst, das das seitliche Dachelement (12) überlappt, und ein Rand am unteren Ende des seitlichen Dachelements (12) unterhalb des überlappenden Teils angeordnet ist.

5. Insassensicherheitsvorrichtung für ein Fahrzeug nach Anspruch 1, wobei das Säulenelement (10) eine äußere Säulenblende (10a), die an einer Außenseite des Fahrzeuginnenraums angeordnet ist, und eine innere Säulenblende umfasst, die an einer Innenseite des Fahrzeuginnenraums angeordnet ist, und wobei der Bügel (3) an der inneren Säulenblende (10b) befestigt ist.

## Revendications

1. Appareil de protection d'un occupant de véhicule, comprenant:
- un panneau de toiture latéral (12) constituant une partie supérieure d'un côté d'un corps de véhicule;
- un panneau de pilier (10) avec une extrémité de celui connectée audit panneau de toiture latéral (12);
- un jeu de piliers (14) attaché audit panneau de pilier (10) pour couvrir une surface du côté intérieur du compartiment de véhicule dudit panneau de pilier (10);
- un airbag (1) fixé audit panneau de pilier (10) et disposé au- dessus dudit jeu de piliers (14), pour le gonflage et déploiement dans le compartiment de véhicule;
- ledit support (3) comprenant une partie de fixation (3b) qui tient ledit airbag (1) et une partie de montage (3 a) qui est montée sur ledit panneau de pilier (10) **caractérisé en ce que** ladite partie de montage (3 a) dudit support (3) est pourvue au-dessous d'une extrémité inférieure dudit panneau de toiture latéral (12).

2. Appareil de protection d'un occupant de véhicule selon la revendication 1, où ledit airbag (1) est disposé plus loin vers l'intérieur dans le compartiment du véhicule qu'une extrémité supérieure dudit jeu de piliers (14).

3. Appareil de protection d'un occupant de véhicule selon la revendication 2, où une surface du côté extérieur du compartiment de véhicule dudit airbag (I) est disposée plus loin vers l'intérieur dans le compartiment de véhicule qu'une surface du côté intérieur du compartiment de véhicule de l'extrémité supérieure dudit jeu de piliers (14).

4. Appareil de protection d'un occupant de véhicule selon la revendication 1, où une extrémité dudit panneau de pilier (10) comprend une partie de recouvrement qui recouvrit ledit panneau de toiture latéral (12); et un bord d'extrémité inférieure dudit panneau de toiture latéral (12) est logé au-dessous de la partie de recouvrement.

5. Appareil de protection d'un occupant de véhicule selon la revendication 1, où ledit panneau de pilier (10) comprend un panneau de pilier extérieur (10a) disposé sur le côté extérieur du compartiment de véhicule et un panneau de pilier intérieur disposé sur un côté intérieur du compartiment de véhicule, et ledit support (3) est monté sur ledit panneau de pilier intérieur (10b).
